# EUROPEAN PATENT APPLICATION

(11) **EP 3 575 965 A1**
(43) Date of publication of application: **04.12.2019**
(21) Application number: 18195427.2
(22) Date of filing: 19.09.2018
(51) Int. Cl.: G06F 9/48

(54) **COMMAND FORWARDING METHOD AND DEVICE, SOLAR SYSTEM, CENTRAL CONTROLLER, COMPUTER-READABLE STORAGE MEDIUM**

(30) Priority: 01.06.2018 CN 201810557393
(71) Applicant: Beijing Hanergy Solar Power Investment Co., Ltd., 101499 Beijing (CN)
(72) Inventor: XIAO, Ya'nan, Beijing, Beijing 101499 (CN); PAN, Wei, Beijing, Beijing 101499 (CN)
(74) Representative: Petit, Maxime

(57) **Abstract**

There are provided in the present disclosure a command forwarding method and device, a solar system, a central controller, and a computer-readable storage medium. The method includes: a receiving step of receiving a command; a storing step of storing a received command into a corresponding command storage area according to a priority; and a forwarding step of forwarding a command stored in the command storage area according to the priority.

## Description

### TECHNICAL FIELD

The present disclosure relates to, but is not limited to the field of control technology, and more particularly to a command forwarding method and device, a solar system, a central controller, and a computer-readable storage medium.

### BACKGROUND

Distributed solar systems, such as building solar systems, refer to small solar power generation and power supply system configured on a user site or near a power consumption site. Distributed solar systems employ a new type of solar energy utilization method with broad development prospects, and can fully utilize solar energy resource.

In the related art, a solar system generally comprises a solar component, a junction box, and a gateway. The solar component is used for photoelectric conversion, the gateway is responsible for receiving and forwarding a control command, and the junction box is used as an electric energy collecting point of the solar component and performs corresponding switch-on and switch-off actions according to a control command. In a distributed solar system in the related art, the gateway forwards different control commands from multiple sources according to the sequence of the time when a command is received.

In a solar system in the related art, when an emergency situation occurs and control is required, a control command may not be timely issued and executed. Such a slow response may deteriorate the situation.

### SUMMARY

There are provided in the present disclosure a command forwarding method and device, a solar system, a central controller, and a computer-readable storage medium.

In a first aspect, the embodiments of the present disclosure provide a command forwarding method, comprising the following steps:
a receiving step of receiving a command;
a storing step of storing a received command into a corresponding command storage area according to a priority; and
a forwarding step of forwarding a command stored in the command storage area according to the priority.

Optionally, the storing step comprises the following steps:
storing a received command with a priority within a first priority range into a first priority cache;
storing a received command with a priority within a second priority range into a second priority queue; and
storing a received command with a priority within a third priority range into a third priority queue, wherein
any priority in the first priority range is higher than any priority in the second priority range, and any priority in the second priority range is higher than any priority in the third priority range.

Optionally, the step of storing the received command with the priority within the first priority range into the first priority cache comprises the following steps:
storing the received command into the first priority cache when the first priority cache is in a default storable state;
comparing a priority of the received command with a priority of a command stored in the first priority cache when the first priority cache is not in a default storable state;
storing the received command into the first priority cache on a condition of the priority of the received command being higher than that of the stored command;
on a condition of the priority of the received command being equal to that of the stored command, storing the received command into the first priority cache when the duration from the forwarding time of the stored command to a current time reaches a preset time duration; and
discarding the received command on a condition of the priority of the received command being lower than that of the stored command.

Optionally, the forwarding step comprises the following steps:
determining whether a command to be forwarded is stored in a first priority cache, and if yes, the to-be-forwarded command stored in the first priority cache is sent;
determining whether a to-be-forwarded command is stored in the second priority cache when no to-be-forwarded command is stored in the first priority cache, and if yes, the to-be-forwarded command stored in the second priority cache is sent; and if not, a command stored in the second priority queue is transferred into the second priority cache when a command is stored in the second priority queue stores; and
determining whether a command to be forwarded is stored in a third priority cache when no command to be forwarded is stored in the second priority cache and the second priority queue, and if yes, the to-be-forwarded command stored in the third priority cache is sent; and if not, the command stored in the third priority queue is transferred into the third priority cache when the command is stored in the third priority queue.

Optionally, the command forwarding method further comprises the following step:
performing the forwarding step again from the step of determining whether the first priority cache stores a command to be forwarded every set timing period.

In a second aspect, there is provided a command forwarding device, comprising:
a receiving module configured to receive a command;
a storage module configured to store a received command into a corresponding command storage area according to a priority; and
a forwarding module configured to forward a command stored in the command storage area according to the priority.

Optionally, the storage module comprises:
a first storage sub-module configured to store a received command with a priority within a first priority range into a first priority cache;
a second storage sub-module configured to store a received command with a priority within a second priority range into a second priority queue; and
a third storage sub-module configured to store a received command with a priority within a third priority range into a third priority queue, wherein
any priority in the first priority range is higher than any priority in the second priority range, and any priority in the second priority range is higher than any priority in the third priority range.

Optionally, the first storage sub-module comprises:
a first cache sub-module configured to store the received command into the first priority cache when the first priority cache is in a default storable state;
a priority comparing sub-module configured to compare a priority of the received command with a priority of a command stored in the first priority cache when the first priority cache is not in a default storable state;
a second cache sub-module configured to store the received command into the first priority cache on a condition of the priority of the received command being higher than that of the stored command;
on a condition of the priority of the received command being equal to that of the stored command, a third cache sub-module configured to store the received command into the first priority cache when the duration from the forwarding time of the stored command to a current time reaches a preset time duration; and discarding the received command on a condition of the priority of the received command being lower than that of the stored command.

Optionally, the forwarding module comprises:
a first forwarding sub-module configured to determine whether a command to be forwarded is stored in a first priority cache, and if yes, the to-be-forwarded command stored in the first priority cache is sent;
a second forwarding sub-module configured to determine whether the to-be-forwarded command is stored in the second priority cache when no to-be-forwarded command is stored in the first priority cache, and if yes, the to-be-forwarded command stored in the second priority cache is sent; and if not, a command stored in the second priority queue is transferred into the second priority cache when the second priority queue stores a command; and
a third forwarding sub-module configured to determine whether a command to be forwarded is stored in a third priority cache when no command to be forwarded is stored in the second priority cache and the second priority queue, and if yes, the to-be-forwarded command stored in the third priority cache is sent; and if not, the command stored in the third priority queue is transferred into the third priority cache when the command is stored in the third priority queue.

Optionally, the command forwarding device further comprises:
a timing module configured to recall the forwarding module every set timing period.

In a third aspect, there is provided a solar system, comprising the command forwarding device described above, wherein the source of the command comprises: at least one of a fire extinguishing system, a local input device, and a remote terminal.

Optionally, the command comprises a switch command and a non-switch command, and the switch command has a priority higher than that of the non-switch command; and the switch command comprises: a turn-off component command and a closure component command.

Optionally, the switch command further comprises a global switch command and a local switch command, and
a priority of the global switch command is higher than that of the local switch command; and
for the global switch commands from the same source, the priority of the global switch command indicating turn-off is higher than that of the global switch command indicating closure.

Optionally, a global switch command from a fire extinguishing system has a priority higher than that of a global switch command from a local input device, and a global switch command from a local input device has a priority higher than that of a global switch command from a remote terminal.

In a fourth aspect, there is provided a central controller, comprising a processor and a memory, wherein at least one executable instruction is stored in the memory, the executable instruction, when loaded and executed by the processor, implements the command forwarding method described above.

In a fifth aspect, there is provided a computer-readable storage medium, wherein the storage medium stores at least one executable instruction is stored in the computer-readable storage medium, the executable instruction, when loaded and executed by a processor, implements the command forwarding method described above.

### BRIEF DESCRIPTION OF THE DRAWINGS

FIG. 1 is a flowchart of a command forwarding method according to an embodiment of the present disclosure;
FIG. 2 is a flowchart of an exemplary implementation of step 102 in FIG. 1;
FIG. 3 is a flowchart of an exemplary implementation of step 203 in FIG. 2;
FIG. 4 is a flowchart of an exemplary implementation of step 103 in FIG. 1;
FIG. 5 is a block diagram of a command forwarding device according to an embodiment of the present disclosure;
FIG. 6 is a block diagram of an exemplary formation of the storage module 52 in FIG. 5;
FIG. 7 is a block diagram of an exemplary formation of the first storage module 61 in FIG. 6;
FIG. 8 is a block diagram of an exemplary formation of the forwarding module 53 in FIG. 5; and
FIG. 9 is a diagram of an application scenario of a solar system comprising a command forwarding device according to an embodiment of the present disclosure.

### DETAILED DESCRIPTION

The present disclosure will be described in further detail with reference to the enclosed drawings, to clearly present the principles and advantages of the present disclosure.

Apparently, the embodiments described in the following exemplary embodiments are only some embodiments of the present disclosure, instead of all embodiments consistent with the present disclosure. Based on the embodiments described in the present disclosure, all other embodiments described by persons of ordinary skill in the art shall be in the scope of protection of the present disclosure.

Unless otherwise defined, technical terms or scientific terms used in the present disclosure should have the ordinary meaning understood by those of ordinary skill in the art.

The words "first", "second" and similar terms used in the present disclosure do not denote any order, quantity, or importance, and are merely used to distinguish different components. The word "comprise" or similar terms mean that elements or objects appearing before the term cover the listed elements or objects and its equivalents appearing after the term while other elements or objects are not excluded. The word "connected" or "linked" and similar terms are not limited to physical or mechanical connections, and may include electrical or communication connection and the connection may be direct or indirect.

An illustrative implementation scenario provided by the present disclosure may be that one or more sources issue commands, while one forwarding device receives these commands and then forwards these commands to a corresponding system, components in the system, or a separate device. In order to make urgent and important commands in these commands not delayed or lost, the illustrative embodiments of the present disclosure provide a command forwarding method and device, and a solar system comprising the device and a central controller executing the method.

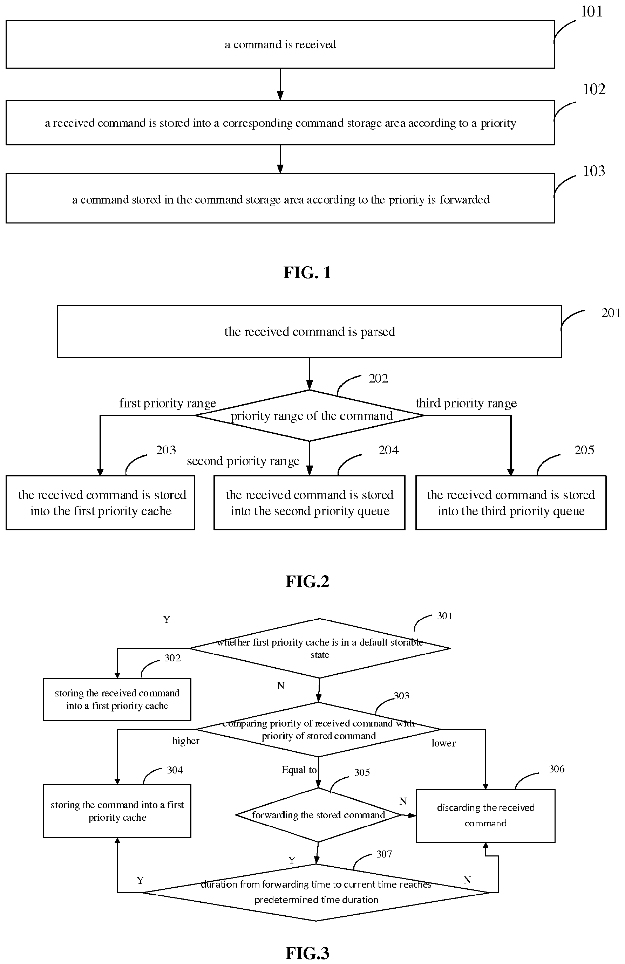

FIG. 1 is a flowchart of a command forwarding method according to an embodiment of the present disclosure. The method may be executed by a central controller with a command forwarding function. Referring to FIG. 1, the method includes the following steps.

In a receiving step 101, a command is received.

In a storing step 102, a received command is stored into a corresponding command storage area according to a priority.

In a forwarding step 103, a command stored in the command storage area according to the priority is forwarded.

With the method provided in this embodiment, when a command is received, the received command may be stored in a corresponding command storage area based on a priority of the command, and then commands stored in a command storage area are forwarded according to a priority, so that the command that needs to be processed in priority is forwarded and processed in priority, and the urgent matters in the system are not delayed due to the delay of forwarding of the urgent command, which speeds up the system's emergency response speed, prevents the situation from being deteriorated due to the delay of the command response, and improves the safety and reliability of the system. Especially when there are a large number of commands and multiple sources, the forwarding and response speed of commands that need to be processed in priority in the system can be effectively improved, and the delay and loss of key commands caused by the forwarding and processing of ordinary commands are prevented.

The implementation of each step of FIG. 1 is illustrated below. It should be understood that a receiving step 101, a storing step 102, and a storing step 103 are three steps that can be performed independently, and thus can be performed simultaneously, or can be executed in turn, or execution of one of the steps can be triggered based on the related event and execution of other steps can be driven.

In step 101, a central controller can listen to one or more input ports, and commands from any source can be received by a central controller when the command appears at a corresponding port. In an exemplary manner, a command data may include parameters such as source, function, and priority.

FIG. 2 is a flow diagram of an illustrative implementation of step 102 of FIG.1. Referring to FIG. 2, it includes the following steps.

In step 201: the received command is parsed.

In this step, each parameter in the command is extracted, for example, by a predetermined format.

In step 202: a priority range to which the priority of the command belongs is determined. When a priority is in a first priority range, step 203 is performed; when a priority is in a second priority range, step 204 is performed; when a priority is in a third priority range, step 205 is performed.

In this step, a priority is firstly determined for each command received. The priority of the command can be set when the command is generated at a source according to a protocol, or a corresponding priority may be set based on the source and function and/or other parameters obtained by parsing the command after the command is received, or a priority of a command also can be embodied by a processing based on its source and function and/or other parameters in the processing flow rather than by a separate data field.

After the priority of each command is obtained, the priority range to which the command belongs can be determined. Generally, the correspondence relationship between the priority and the priority range has been set in advance, so that the corresponding priority range can be directly obtained if the priority is obtained.

When the priority of the command is in the first priority range, go to step 203; when the priority of the command is in the second priority range, go to step 204; when the priority of the command is in the third priority range, go to step 205.

In an embodiment of the present disclosure, the priorities in the first priority range, the second priority range and the third priority range are sequentially decreased, that is, any priority in the first priority range is higher than that in the second priority range, and any priority in the second priority range is higher than that in the third priority range.

Each priority range can correspond to one command storage area. It can be understood that more priority ranges and corresponding command storage areas can also be set, and the present disclosure does not limit the priority range and the number of the command storage areas.

The command storage area may be a memory, a cache, a register, or a part thereof and a combination thereof set in a central controller. For example, a first command storage area may include a first priority cache, and in some implementations, the first priority cache may only store one command; the second command storage area may include a second priority cache and a second priority queue. In some implementations, the second priority cache may only store one command, and the second priority queue may store one or more commands, such as a first-in, first-out command queue, and during operation, the second priority queue may transfer one command into the second priority cache every time; the third command storage area may include a third priority cache and a third priority queue. In some implementations, the third priority cache may only store one command, and the third priority queue can store one or more commands, such as a first-in, first-out command queue, and during operation, the third priority queue can transfer one command into the third priority cache every time.

In step 203: the received command is stored into the first priority cache when the priority is in the first priority range.

The priority in the first priority range is the highest relative to other priority ranges. Therefore, when the priority of the command is in the first priority range, the command is stored in the first priority cache and is not stored in a queue so as to increase the response speed of the command as much as possible, so that the command is not delayed due to queue-up in a queue. Referring to the storage manner described in detail below, it can be understood that, since the first priority cache can only store one command at a time, when a storage conflict occurs, some commands whose priorities are in the first priority range in the received commands will not or temporarily will not be stored in the first priority cache.

In step 204: the received command is stored into the second priority queue when the priority is in the second priority range.

When the priority of the received command is in the second priority range, the corresponding second command storage area includes a second priority queue and a second priority cache, therefore, the received command can be stored in the second priority queue, and enters the second priority cache successively for forwarding.

In step 205: the received command is stored into the third priority queue when the priority is in the third priority range.

When the priority of the received command is in the third priority range, the corresponding third command storage area includes a third priority queue and a third priority cache, therefore, the received command may be stored in the third priority queue and enters the third priority cache successively for forwarding.

The first command storage area in step 203 is a priority cache that can store only one command at a time, therefore, there may be conflicts during storage, and a strategy for overcoming the conflict is needed. FIG. 3 shows an illustrative implementation manner of step 203 and includes the following steps as shown in FIG.3.

In step 301: whether the state of the first priority cache is in a default storable state is determined, and if yes, go to step 302; and if no, go to step 303.

Each cache can be in one of the following three states: a default storable state indicating that a command can be directly stored, that is, there is no command stored there or the stored command has been forwarded and the duration from the forwarding time to the current time exceeds a predetermined duration (the predetermined duration is set to be sufficient to complete the execution of the command forwarded before the predetermined duration); a forwarded state indicating that the stored command has been forwarded, but the time interval between the forwarding time and the current time has not reached the predetermined duration; and a non-forwarding state indicating that the stored command has not been forwarded.

In this step, if the first priority cache is in a default storable state, go to step 302; otherwise, go to step 303.

In step 302: the received command is stored into a first priority cache when the first priority cache is in a default storable state.

When the first priority cache is in a default storable state, it indicates that the first priority cache can be directly stored with a command, while the previous step has determined that the priority of the received command is in a first priority range, and therefore the received command is directly stored in a first priority cache.

In step 303: when the first priority cache is not in a default storable state, the priority of the received command is compared with the priority of the command stored in the first priority cache, and if the received command has a priority higher than the priority of the stored command, go to step 304; if the priority of the received command is equal to the priority of the stored command, go to step 305; and if the received command has a priority lower than that of the stored command, go to step 306.

When the priority of the received command is higher than the priority of the stored command, it indicates that the received command needs to be processed in priority, therefore the command stored in the first priority cache can be directly overwritten by the received command, that is, go to step 304: the received command is stored into a first priority cache.

When the priority of the received command is lower than the priority of the stored command, it is indicated that the stored command should be processed in priority, therefore go to step 306: discard the received command. In other implementations, the command can also be temporarily stored in another area, and can enter a storage process after waiting for a period of time.

When the priority of the received command is equal to the priority of the stored command, it is indicated that the priorities of the two commands are the same, and it also needs to go to step 305: whether the stored command has been forwarded is determined, and if yes, go to step 307; and if no, the stored command should not be overwritten, and go to step 306 to discard the received command. In other implementations, the command may also be temporarily stored in another area, and then wait for a period of time before entering a storage process.

When the stored command has been forwarded, go to step 307: whether the duration from the forwarding time to the current time reaches predetermined time duration is determined, and if yes, it is indicated that the stored command has been forwarded and it can be considered that the controlled object corresponding to the command finishes executing the command, therefore, go to step 304 to store the command into a first priority cache. If the duration from the forwarding time to the current time does not reach predetermined time duration, the stored command should not be overwritten, and therefore, go to step 306 to discard the received command. In other implementations, the command may also be temporarily stored in another area, and then wait for a period of time before entering a storage process.

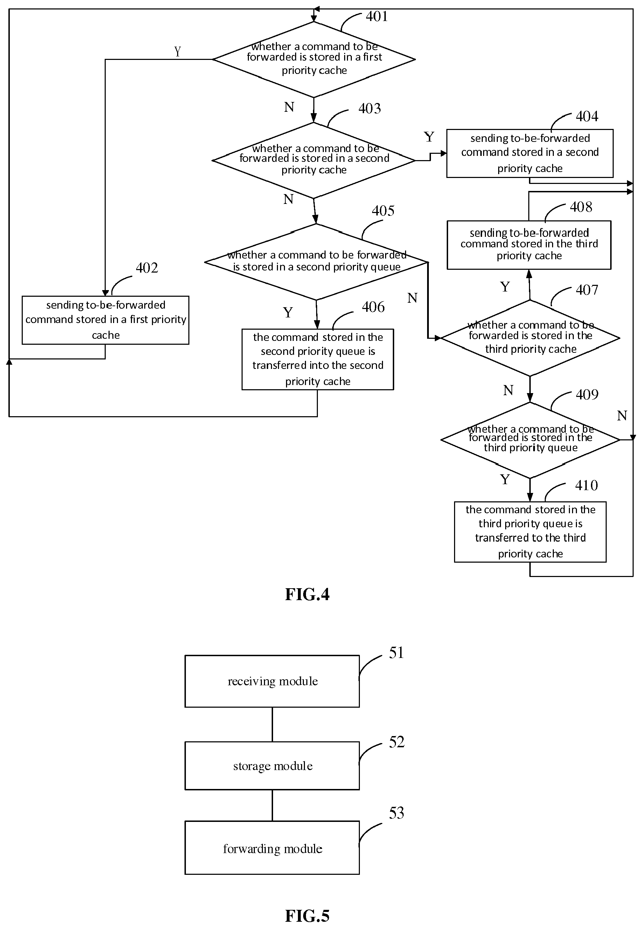

FIG. 4 is a flow diagram of an illustrative implementation of step 103 of FIG. 1. Referring to FIG. 4 which includes the following steps:
In step 401, whether a command to be forwarded is stored in a first priority cache is determined, and if yes, execute step 402; and if no, execute step 403.

It can be seen from the foregoing storage step that the priority of any to-be-forwarded command stored in a first priority cache is higher than the priority of any to-be-forwarded command stored in a second priority cache and a second priority queue. The priority of any to-be-forwarded command stored in a second priority cache and a second priority queue is higher than that of any to-be-forwarded command stored in a third priority cache and a third priority queue.

The priority of the command stored in the first priority cache is the highest; therefore, whether a command to be forwarded is stored in the first priority cache is checked firstly. Whether the command to be forwarded is stored may be determined according to the state of the first priority cache. It is regarded that a command to be forwarded is not stored when the first priority cache is in a default storable state, and it is regarded that a command to be forwarded is stored when the first priority cache is in other states; if stored, go to step 402, if not stored, go to step 403.

In some possible cases, the first priority cache may store a command that has been forwarded, that is, a cache state turns to be a forwarded state. At this moment, it may be determined whether the duration from the forwarding time to the current time exceeds a predetermined time duration, and if yes, it is regarded that the to-be-forwarded command is not stored; and if the predetermined time duration is not reached, it can wait until the predetermined time duration is reached and the cache state of the first priority cache is set to be a default storable state, and execution is started again from step 401.

In step 402, a to-be-forwarded command stored in a first priority cache is sent.

Commands to be forwarded are stored in a first priority cache and therefore can be sent directly. In some implementations, the to-be-forwarded command stored in the first priority cache is a global command, and thus can be sent to all controlled objects in a broadcast manner.

After the to-be-forwarded command stored in the first priority cache is sent, the cache state of the first priority cache may be set to be a default storable state after predetermined time duration, and execution is performed again from step 401.

In step 403, whether a command to be forwarded is stored in a second priority cache is determined, and if yes, execute step 404; and if no, execute step 405.

When no command to be forwarded is stored in the first priority cache, the command in the second priority storage area is processed. Firstly, it can be determined whether a command to be forwarded is stored in the second priority cache, and if yes, go to step 404; and if no, go to step 405.

In step 404, a to-be-forwarded command stored in a second priority cache is sent.

The command to be forwarded is stored in a second priority cache and thus can be sent directly. In some implementations, the to-be-forwarded command stored in the second priority cache is a local command, and thus can be sent to the corresponding controlled object by unicasting.

After the to-be-forwarded command stored in the second priority cache is sent, a cache state of the second priority cache may be set to be a default storable state after the set time duration, and execution is performed again from step 401.

In step 405, whether a command to be forwarded is stored in a second priority queue is determined, and if yes, execute step 406; and if no, execute step 407.

The command stored in the second priority queue needs to be extracted into the second priority cache for transmission. Therefore, when a command to be forwarded is not stored in the second priority cache, it is necessary to check whether the command to be forwarded is stored in the second priority queue. If yes, go to step 406, and if no, go to step 407.

In step 406, the command stored in the second priority queue is transferred into the second priority cache, and then return to step 401.

After the command stored in a second priority queue is transferred in a second priority cache, the transferred command can be forwarded out when the step 404 is executed next time, and only one command is generally transferred at a time. After the step 406 is executed, go to step 401 to restart.

In step 407, whether a command to be forwarded is stored in the third priority cache is determine, and if yes, execute step 408; if no, execute step 409.

If the result of the determination in step 405 is no, that is, it is indicated that the second priority cache and the second priority queue are not stored with the to-be-forwarded command, the command in the third priority storage area is processed. Firstly, whether the third priority cache is stored with the command to be forwarded is determined, and if yes, go to step 408; and if no, go to step 409.

In step 408, the to-be-forwarded command stored in the third priority cache is sent, and then return to step 401.

Commands to be forwarded are stored in a third priority cache and thus can be sent directly. The object oriented according to the command can be broadcast or unicast.

After the step is executed, after the predetermined time duration, the cache state of the third priority cache is set to be a default storable state, and go to step 401 to restart.

In step 409, whether a command to be forwarded is stored in the third priority queue is determined, and if yes, execute step 410; and if no, return to step 401.

The command stored in the third priority queue needs to be extracted to the third priority cache for transmission. Therefore, when the to-be-forward command is not stored in the third priority cache, it is necessary to check whether the to-be-forward command is stored in the third priority queue. If yes, go to step 410, if no, go to step 401 and start over.

In step 410, the command stored in the third priority queue is transferred to the third priority cache, and then return to step 401.

After the command stored in the third priority queue is transferred to the third priority cache, the transferred command can be forwarded out when the step 408 is executed next time. After this step is executed, go to step 401 and start over.

It can be seen from the above steps 401-410 that the commands in the second priority cache and the second priority queue are processed only when no command is stored in the first priority cache. The commands in the third priority cache and the third priority queue are processed only when no command is stored in the first priority cache and in both the second priority cache and the second priority queue. After some steps, such as steps 402, 404, 406, 408 or 410, are executed, go to step 401 to restart, which ensures that the commands stored in the first priority cache at any moment can be forwarded in time and time is not wasted due to processing of other steps.

In an implementation manner shown in FIG. 4, a timer task may also be started upon or slightly before or after the start of step 401. The timer task is set with a timing duration, so that forwarding is performed again from step 401 every a preset timing duration. In some possible implementations, the forwarding process of the first priority cache is performed when the set timing duration is reached, or when the forwarding process of the first priority cache is ended, go to step 401 and start from the beginning.

After a set time period has elapsed after the command is forwarded, the corresponding state of each command-controlled object can also be queried, for example, for the command related to turn-off, whether the corresponding component performs the turn-off, and then the result of the query is collected into a central controller, and can be fed back to the corresponding command source.

FIG. 5 is a block diagram of a command forwarding device according to an embodiment of the present disclosure. Referring to FIG. 5, the command forwarding device includes:
a receiving module 51 configured to receive a command;
a storage module 52 configured to store a received command into a corresponding command storage area according to a priority; and
a forwarding module 53 configured to forward a command stored in the command storage area according to the priority.

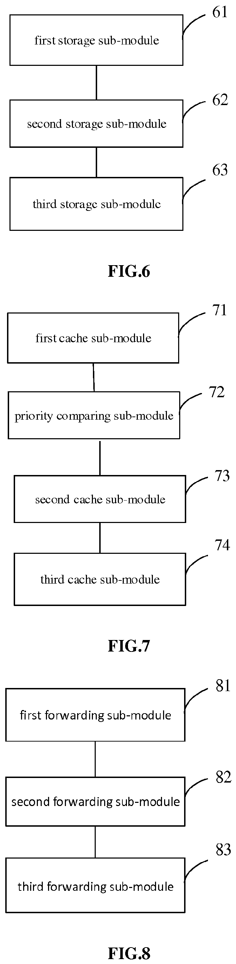

In some possible implementation, referring to FIG. 6, the storage module 52 includes:
a first storage sub-module 61 configured to store a received command with a priority within a first priority range into a first priority cache;
a second storage sub-module 62 configured to store a received command with a priority within a second priority range into a second priority queue; and
a third storage sub-module 63 configured to store a received command with a priority within a third priority range into a third priority queue, wherein
any priority in the first priority range is higher than any priority in the second priority range, and any priority in the second priority range is higher than any priority in the third priority range.

In a possible implementation, referring to FIG. 7, the first storage sub-module 61 includes:
a first cache sub-module 71 configured to store the received command into the first priority cache when the first priority cache is in a default storable state;
a priority comparing sub-module 72 configured to compare a priority of the received command with a priority of a command stored in the first priority cache when the first priority cache is not in a default storable state;
a second cache sub-module 73 configured to store the received command into the first priority cache on a condition of a priority of the received command being higher than that of the stored command; and
a third cache sub-module 74 configured to store the received command into the first priority cache when the duration from the forwarding time of the stored command to a current time reaches a preset time duration, on a condition of a priority of the received command being equal to that of the stored command; and discarding the received command on a condition of a priority of the received command being lower than that of the stored command.

In a possible implementation, referring to FIG. 8, the storage 53 module includes:
a first forwarding sub-module 81 configured to determine whether a command to be forwarded is stored in a first priority cache, and if yes, the to-be-forwarded command stored in the first priority cache is sent;
a second forwarding sub-module 82 configured to determine whether the to-be-forwarded command is stored in the second priority cache when no to-be-forwarded command is stored in the first priority cache, and if yes, the to-be-forwarded command stored in the second priority cache is sent; and if not, a command stored in the second priority queue is transferred into the second priority cache when the second priority queue stores a command; and
a third forwarding sub-module 83 configured to determine whether a command to be forwarded is stored in a third priority cache when the command to be forwarded is not stored in either the second priority cache or the second priority queue, and if yes, the to-be-forwarded command stored in the third priority cache is sent; and if not, the command stored in the third priority queue is transferred into the third priority cache when the command is stored in the third priority queue.

Herein, the priority of any to-be-forwarded command stored in a first priority cache is higher than the priority of any to-be-forwarded command stored in a second priority cache and a second priority queue. The priority of any to-be-forwarded command stored in a second priority cache and a second priority queue is higher than that of any to-be-forwarded command stored in a third priority cache and a third priority queue.

Herein, the device further includes:
a timing module configured to recall the forwarding module 53 every set timing period.

It should be noted that the command forwarding device provided by the above embodiment is exemplified only by the above division of each of the functional modules when the vehicle prompts. In practice, the above-described functions may be assigned and completed by different functional modules in accordance with requirements, such that the internal structure of the device can be divided into different functional modules to complete all or part of the functions described above. In addition, the device and the method provided in the above embodiment follow the same principal, and the implementation process and the advantageous benefits thereof can be described in the method embodiment and may not be described again hereto.

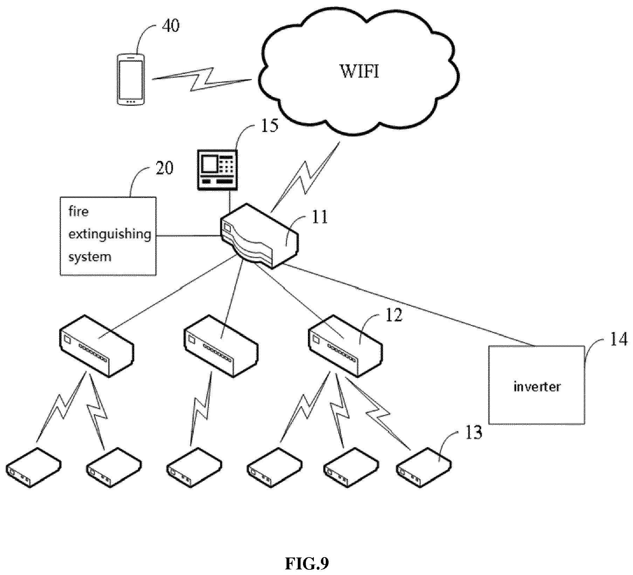

An embodiment of the present disclosure also provides a solar system including a command forwarding device provided in the embodiment of the present disclosure. FIG. 9 shows a schematic diagram of an application scenario of a solar system including a command forwarding device. In FIG. 9, the command forwarding device is shown as a central controller. Referring to FIG. 9, in the application scenario, a central controller 11 establishes a communication connection with each local gateway 12, respectively, while each of the local gateway 12 is in communication connection with each junction box circuit 13 associated therewith. Illustratively, three local gateways 12 associated with two, one and three junction box circuits 13, respectively, are shown in FIG.9. Furthermore, an inverter 14 to which the junction box circuit 13 is connected can also be connected with a central controller 11 through direct communication or via a local gateway. Thereby, the central controller 11 can perform the control operation of the solar system through the local gateway 12, the junction box circuit 13, and the inverter 14. In addition, the central controller 11 is also provided with a communication connection with a fire protection system 20, and a user input device 15 is also provided on or around the central controller 11. The central controller 11 can also be connected to a remote terminal 40 via Internet or WIFI, or the central controller 11 can be connected to the user terminal 40 through a server as an intermediary device. Thus, the central controller 11 can receive commands from at least one of the fire protection system 20, the local input device 15, and the user terminal 40, and then forward it to the local gateway 12 and the inverter 14, and the local gateway 12 then sends the command to the corresponding junction box circuit 13, and components in the solar system (e.g., junction box circuit 13 and inverter 14) can perform corresponding processing in accordance with commands.

In a solar system, the source of commands may include one or more of the fire protection system 20, the local input device 15, and the remote terminal 40. The fire protection system 20 in the present disclosure may be, for example, a circuit system for receiving a fire alerting signal within a mounting site of the solar components; the local input device 15 may be a button, a manipulation board, a touch board and the like disposed on or around the central controller. The local input device can be operated by an operator to issue a command to the central controller 11; a remote terminal 40 such as a mobile phone, a computer, or the like can be connected to the central controller 11 through a server or directly through a wired or wireless signal, and can sends commands to the central controller 11; thus the source of the above commands may include, but is not limited to, the fire protection system 20, the local input device 15, and the user terminal 40. It should be understood that other types of command sources may also be included as necessary. The central controller 11 in the present disclosure may also be referred to as a solar central controller with command receiving, storing, and forwarding functions, and may have other control and monitoring functions, including hardware and software required to implement these functions.

Command types applied to the solar system may include, for example, a turn-off component command, a closure component command, a junction box data query command, a gateway/junction box user configuration command, a junction box maintenance command, and a gateway maintenance command. The most important commands for the solar system include the turn-off component command and the closure component command, which need to be processed in priority, can be regarded as a key command and also can be referred to as a switch command. Other commands can be regarded as ordinary commands, and can also be referred to as non-switch commands. Obviously, the priority of the key commands is higher than that of the ordinary commands.

From the perspective of a controlled object, a key command, that is, a switch command can be further divided into a global switch command and a local switch command. The global switch command is a turn-off component command for closing all components in a solar system or a closure component command closing all components, and may also be referred to as a global turn-off/closure command; while a local switch command is a turn-off component command that closes some components in the solar system or a closure component command that closes some components, and may also be referred to as a local turn-off/closure command. In some possible implementations, the global switch command is for turning off or closing all junction boxes in a solar system; while the local switch command is for turning off or closing some junction boxes or a single junction box in a solar system.

A fire protection system or a local input device typically only sends global switch commands, while the remote terminal can send above any one or more commands. The general priority principle for processing commands is that for key commands, the fire protection system controls the fire safety of the entire building. When a fire occurs, the timeliness and accuracy of its information is the highest, therefore the command sent by it has the highest priority. The timeliness and accuracy for local monitoring personnel to discover a fire takes second place, and therefore the command sent by the local input device needs lower priority. However, a user terminal generally only makes determination according to a report of the latest round of temperature data, and the time delay is larger, therefore the priority required is lower. The priority of an ordinary command sent by a user terminal generally does not involve an urgent transaction; therefore, the priority required may be the lowest.

Based on the above principle, the priority of the global switch command should be higher than the priority of the local switch command, and the priority of the local switch command should be higher than the priority of the non-switch command. For example, the global switch command is stored in a first priority cache, the local switch command is stored in a second priority queue, and the non-switch command is stored in a third priority queue, that is, the priority of all global switch commands is considered to be in a first priority range, the priority of all local switch commands is in a second priority range, and the priority of all non-switch commands is in a third priority range. And although both belong to the first priority range, the priority of the global switch command from the fire protection system should be higher than the priority of the global switch command from the local input device, and the priority of the global switch command from the local input device should be higher than the priority of the global switch command from the remote terminal; and in a global switch command from the same source, the priority of the global switch command indicating turn-off should be higher than the priority of the global switch command indicating closure.

Such a setting, for example, can make the global switch command from the fire protection system and indicating turn-off get the highest priority, that is, as long as the fire protection system discovers a fire alarm, the global switch command issued by the fire protection system and indicating turn-off can be given the highest priority for forwarding and execution, so that the solar system can quickly respond to the fire with a global turn-off.

When receiving a command from a fire protection system, a local input device or a remote terminal, a command forwarding device provided in the solar system of the present embodiment may store the received command into the corresponding command storage area according to a priority, and the forwarding also can be performed according to the command priority, so that the command that needs to be processed in priority is forwarded and processed in priority, the urgent transaction in the solar system will not be delayed due to the delay of command forwarding, which accelerates the emergency response speed of the solar system and prevents the deterioration of the situation caused by the response delay, and improves the safety and reliability of the solar system. Especially when there is a large number of commands and multiple sources, the forwarding and response speed of commands that need to be processed in priority in the solar system can be effectively improved, and the delay and loss of key commands caused by the forwarding and processing of ordinary commands are prevented.

There is further provided in an embodiment of the present disclosure a central controller including a processor and a memory. The memory stores at least one executable instruction that is loaded and executed by the processor to implement an operation performed by any command forwarding method. These executable instructions can be executed, for example, in the operating environment of an embedded Linux system. The processor may include a general-purpose central processing unit (CPU), a microprocessor, an application-specific integrated circuit (ASIC), a digital signal processor (DSP), a digital signal processing device (DSPD), programmable logic device (PLD), field programmable gate array (FPGA), controller, microcontroller, or multiple integrated circuits for controlling program execution. The memory may include a Read-Only Memory (ROM) or other types of static storage devices that can store static information and instructions, a Random Access Memory (RAM) or other types of dynamic storage devices that can store information and instructions. It may also include Electrically Erasable Programmable Read-Only Memory (EEPROM), Compact Disc Read-Only Memory (CD-ROM) or other optical disk storage, optical disk storage (including compressed optical discs, laser discs, optical discs, digital universal discs, Blu-ray discs, etc.), magnetic disk storage medium or other magnetic storage devices, or any other media that can be used to carry or store desired program codes in the form of instructions or data structures and can be stored and accessed by a computer, but is not limited thereto. The memory can be arranged independently or integrated with a processor.

There is further provided in an embodiment of the present disclosure a computer-readable storage medium storing at least one executable instruction that implements the command forwarding method as described above when the instruction is loaded and executed by a processor. The computer-readable storage medium may include a Read-Only Memory (ROM) or other types of static storage devices that can store static information and instructions, a Random Access Memory (RAM) or other types of dynamic storage devices that can store information and instructions, may also include Electrically Erasable Programmable Read-Only Memory (EEPROM), Compact Disc Read-Only Memory (CD-ROM), or other optical disk storage, optical disc storage (including compact discs, laser discs, optical discs, digital universal discs, Blue-ray discs, etc.), disk storage medium or other magnetic storage devices, or any other media that can be used to carry or store desired program codes in the form of instructions or data structures and can be stored and accessed by a computer, but is not limited thereto.

The foregoing descriptions are only exemplary embodiments of the present disclosure, and are not intended to limit the present disclosure. Within the spirit and principles of the disclosure, any modifications, equivalent substitutions, improvements, etc., are within of protection scope of the appended claims of the present disclosure.

## Claims

1. A command forwarding method, **characterized in that**, wherein the command forwarding method comprises:
a receiving step of receiving a command (101);
a storing step of storing a received command into a corresponding command storage area according to a priority (102); and
a forwarding step of forwarding a command stored in the command storage area according to the priority (103).

2. The command forwarding method according to claim 1, wherein the storing step comprises:
storing a received command with a priority within a first priority range into a first priority cache (203);
storing a received command with a priority within a second priority range into a second priority queue (204); and
storing a received command with a priority within a third priority range into a third priority queue (205);
wherein any priority in the first priority range is higher than any priority in the second priority range, and any priority in the second priority range is higher than any priority in the third priority range.

3. The command forwarding method according to claim 2, wherein the step of storing the received command with the priority within the first priority range into the first priority cache comprises the following steps:
storing the received command into the first priority cache when the first priority cache is in a default storable state (302);
comparing a priority of the received command with a priority of a command stored in the first priority cache when the first priority cache is not in a default storable state (303);
storing the received command into the first priority cache on a condition of the priority of the received command being higher than that of the stored command (304);
on a condition of the priority of the received command being equal to that of the stored command, storing the received command into the first priority cache when the duration from the forwarding time of the stored command to a current time reaches a preset time duration (307); and
discarding the received command on a condition of the priority of the received command being lower than that of the stored command (306).

4. The command forwarding method according to any one of claims 1 to 3, wherein the forwarding step comprises the following steps:
determining whether a command to be forwarded is stored in a first priority cache (401), and if yes, the to-be-forwarded command stored in the first priority cache is sent (402);
determining whether a to-be-forwarded command is stored in the second priority cache when no to-be-forwarded command is stored in the first priority cache(403), and if yes, the to-be-forwarded command stored in the second priority cache is sent (404); and if not, a command stored in the second priority queue is transferred into the second priority cache when a command is stored in the second priority queue stores (405); and
determining whether a command to be forwarded is stored in a third priority cache when no command to be forwarded is stored in the second priority cache and the second priority queue (407), and if yes, the to-be-forwarded command stored in the third priority cache is sent (408); and if not, the command stored in the third priority queue is transferred into the third priority cache when the command is stored in the third priority queue (410).

5. The command forwarding method according to claim 4, wherein the command forwarding method further comprises:
performing the forwarding step again from the step of determining whether the first priority cache stores a command to be forwarded every set timing period.

6. A command forwarding device, **characterized by** comprising:
a receiving module (51) configured to receive a command;
a storage module (52) configured to store a received command into a corresponding command storage area according to a priority; and
a forwarding module (53) configured to forward a command stored in the command storage area according to the priority.

7. The command forwarding device according to claim 6, wherein the storage module (52) comprises:
a first storage sub-module (61) configured to store a received command with a priority within a first priority range into a first priority cache;
a second storage sub-module (62) configured to store a received command with a priority within a second priority range into a second priority queue; and
a third storage sub-module (63) configured to store a received command with a priority within a third priority range into a third priority queue, wherein
any priority in the first priority range is higher than any priority in the second priority range, and any priority in the second priority range is higher than any priority in the third priority range.

8. The command forwarding device according to claim 7, wherein the first storage sub-module (61) comprises:
a first cache sub-module (71) configured to store the received command into the first priority cache when the first priority cache is in a default storable state;
a priority comparing sub-module (72) configured to compare a priority of the received command with a priority of a command stored in the first priority cache when the first priority cache is not in a default storable state;
a second cache sub-module (73) configured to store the received command into the first priority cache on a condition of the priority of the received command being higher than that of the stored command;
on a condition of the priority of the received command being equal to that of the stored command, a third cache sub-module (74) configured to store the received command into the first priority cache when the duration from the forwarding time of the stored command to a current time reaches a preset time duration; and discarding the received command on a condition of the priority of the received command being lower than that of the stored command.

9. The command forwarding device according to any one of claims 6-8, wherein the forwarding module (53) comprises:
a first forwarding sub-module (81) configured to determine whether a command to be forwarded is stored in a first priority cache, and if yes, the to-be-forwarded command stored in the first priority cache is sent;
a second forwarding sub-module (82) configured to determine whether the to-be-forwarded command is stored in the second priority cache when no to-be-forwarded command is stored in the first priority cache, and if yes, the to-be-forwarded command stored in the second priority cache is sent; and if not, a command stored in the second priority queue is transferred into the second priority cache when the second priority queue stores a command; and
a third forwarding sub-module (83) configured to determine whether a command to be forwarded is stored in a third priority cache when no command to be forwarded is stored in the second priority cache and the second priority queue, and if yes, the to-be-forwarded command stored in the third priority cache is sent; and if not, the command stored in the third priority queue is transferred into the third priority cache when the command is stored in the third priority queue;
optionally, the command forwarding device further comprises: a timing module configured to recall the forwarding module every set timing period.

10. A solar system, **characterized by** comprising the command forwarding device according to any one of claims 6 to 9, wherein the source of the command comprises at least one of a fire extinguishing system (20), a local input device (15), and a remote terminal.

11. The solar system according to claim 10, wherein the command comprises a switch command and a non-switch command, and the switch command has a priority higher than that of the non-switch command; and the switch command comprises: a turn-off component command and a closure component command.

12. The solar system according to claim 11, wherein the switch command further comprises a global switch command and a local switch command, and
a priority of the global switch command is higher than that of the local switch command; and
for the global switch commands from the same source, the priority of the global switch command indicating turn-off is higher than that of the global switch command indicating closure.

13. The solar system according to claim 12, wherein a global switch command from the fire extinguishing system (20) has a priority higher than that of a global switch command from the local input device (15), and a global switch command from the local input device (15) has a priority higher than that of a global switch command from a remote terminal.

14. A central controller, **characterized by** comprising a processor and a memory, wherein at least one executable instruction is stored in the memory, the executable instruction, when loaded and executed by the processor, implements the command forwarding method according to any one of claims 1 to 5.

15. A computer-readable storage medium, **characterized in that**, wherein at least one executable instruction is stored in the computer-readable storage medium, the executable instruction, when loaded and executed by a processor, implements the command forwarding method according to any one of claims 1 to 5.
